# EUROPEAN PATENT APPLICATION

(11) **EP 4 835 149 A1**
(43) Date of publication of application: **04.11.2026**
(21) Application number: 25747599.6
(22) Date of filing: 20.01.2025
(51) Int. Cl.: C25B 9/60, C25B 9/70, C25B 9/73, C25B 11/036, C25B 1/02, C25B 15/08

(54) **ELECTRODE PLATE FRAME AND ELECTROLYTIC BATH**

(30) Priority: 02.02.2024 CN 202420267881 U; 02.02.2024 CN 202420272522 U
(71) Applicant: Wuxi Longi Hydrogen Technology Co., Ltd., Wuxi, Jiangsu 214135 (CN)
(72) Inventor: ZHANG, Ke, Wuxi, Jiangsu 214135 (CN); JIAO, Le, Wuxi, Jiangsu 214135 (CN); HUAN, Jiajun, Wuxi, Jiangsu 214135 (CN)
(74) Representative: Grünecker Patent- und Rechtsanwälte PartG mbB
(86) International application number: PCT/CN2025/073362
(87) International publication number: WO 2025/162027

(57) **Abstract**

The present application discloses an electrode plate frame and an electrolyzer, relating to the technical field of hydrogen production by electrolysis, so as to solve a problem of leakage at joints between the electrode plate frame and external pipes. The electrode plate frame includes an annular frame body. An outer peripheral surface of the annular frame body is provided with one or a plurality of fluid inlets/outlets. Mounting holes are provided around each of the plurality of fluid inlets/outlets on the outer peripheral surface of the annular frame body such that each fluid inlet/outlet and corresponding mounting holes form a flange structure for connecting to each of the external pipes. Compared with an existing manner of welding pipes at the inlets/outlets, in the present application, the fluid inlets/outlets of the annular frame body do not require welding and have no welding joints, so as to avoid stress corrosion and also avoid galvanic corrosion caused by a welding material being different from materials of the pipe and the electrode plate frame during welding, thereby reducing a leakage risk at the joints between the electrode plate frame and the external pipes.

## Description

### CROSS-REFERENCE TO RELATED APPLICATIONS

The present application claims priority to and benefits of Chinese Patent Application No. 202420267881.2, filed on February 02, 2024, and Chinese Patent Application No. 202420272522.6, filed on February 02, 2024, which are incorporated by reference in their entireties.

### TECHNICAL FIELD

The present application relates to the technical field of hydrogen production by electrolysis, and in particular to an electrode plate frame and an electrolyzer.

### BACKGROUND

Hydrogen production equipment in the related art is typically a press-filter bipolar electrolyzer, including endplates on two sides and a plurality of bipolar plates in a middle. One side of the endplate is provided with an electrolyte inlet and a gas outlet. The electrolyte inlet communicates with an external electrolyte supply pipe to feed an electrolyte into the electrolyzer. The gas outlet communicates with an external gas pipe to discharge a gas produced after electrolysis. In the related art, pipes are usually welded at the electrolyte inlet and the gas outlet, so as to facilitate connection to external pipes. Because of residual stress caused by pipe welding, anti-corrosion coatings at the electrolyte inlet and the gas outlet easily fall off. In addition, leakage easily occurs at weld seams due to various factors such as cavitation, washout, and stress corrosion inside the electrolyte inlet and the gas outlet.

### SUMMARY

An objective of the present application is to provide an electrode plate frame and an electrolyzer, so as to reduce a leakage risk at joints between the electrode plate frame and external pipes.

According to a first aspect, the present application provides an electrode plate frame, including an annular frame body. An outer peripheral surface of the annular frame body is provided with one or a plurality of fluid inlets/outlets. Mounting holes are provided around each of the plurality of fluid inlets/outlets. The mounting holes are located on the outer peripheral surface of the annular frame body such that each fluid inlet/outlet and corresponding mounting holes form a flange structure for connecting to an external pipe.

When the foregoing technical solution is adopted, since the mounting holes are directly provided around the fluid inlet/outlet on the outer peripheral surface of the annular frame body, the flange structure is directly integrally formed on the annular frame body, and the fluid inlet/outlet is connected to the external pipe by using the flange structure. Compared with an existing manner of welding pipes at the inlets/outlets, in the present application, the fluid inlets/outlets of the annular frame body do not require welding and have no welding joints, so as to avoid stress corrosion and also avoid galvanic corrosion caused by a welding material being different from materials of the pipe and the electrode plate frame during welding, thereby reducing a leakage risk at the joints between the electrode plate frame and the external pipes.

In some possible implementations, a flange face of the flange structure is a flat surface. In this way, during manufacturing, a surface of a circumferential surface of the annular frame body corresponding to the flange structure is cut to obtain a flat flange face, so that the flange structure is in contact with a flange of the external pipe more closely and securely, thereby further reducing the leakage risk at the joints between the electrode plate frame and the external pipes.

In some possible implementations, the outer peripheral surface of the annular frame body is provided with a plurality of avoidance notches arranged at intervals along a circumferential direction. Extension directions of the avoidance notches are parallel to an axis of the annular frame body. Because the mounting holes need to be radially provided in the annular frame body, to enable the mounting holes to have an effective connection depth and prevent the mounting holes from penetrating channels in the annular frame body, a radial thickness of the annular frame body needs to be increased, and correspondingly, an outer diameter of the annular frame body needs to be increased. In order not to increase a distributed circumferential diameter of tie bolts and a diameter of endplates, and not to increase production costs, avoidance notches are provided in areas on the outer peripheral surface of the annular frame body that interfere with the tie bolts.

In some possible implementations, the plurality of fluid inlets/outlets include gas outlets and electrolyte inlets. In this way, the gas outlets and the electrolyte inlets in the annular frame body that are configured to connect to the external pipes can all be provided as flange structures, thereby reducing the leakage risk at the joint between the electrode plate frame and the external pipes.

In some possible implementations, the electrolyte inlets extend through the annular frame body along a radial direction of the annular frame body, and the annular frame body is further provided with electrolyte distribution channels. Inlets of the electrolyte distribution channels are provided on an inner peripheral surface of the annular frame body, and outlets of the electrolyte distribution channels are provided on two end surfaces of the annular frame body. In this way, an electrolyte enters a chamber inside an inner ring of the annular frame body from the electrolyte inlets, and then enters the electrolyte distribution channels from the chamber, such that the electrolyte is distributed to electrolysis compartments located on two sides of the electrode plate frame through the electrolyte distribution channels. An entry and distribution manner of the electrolyte enables the electrolyte to be quickly and evenly added to the electrolysis compartments, thereby alleviating a concentration polarization during electrolysis, reducing energy consumption of the electrolyzer, and laying a foundation for increasing a current density.

In some possible implementations, the electrolyte distribution channels include at least two anode electrolyte distribution channels and at least two cathode electrolyte distribution channels. The anode electrolyte distribution channels and the cathode electrolyte distribution channels are alternately arranged along a circumferential direction of the electrode plate frame. In this way, the electrolyte diffuses into anode compartments and cathode compartments via a plurality of points within a large central angle range of electrode plate assemblies, so that distribution flow fields of the electrolyte in the anode compartments and the cathode compartments are more uniform, thereby improving uniformity of electrolytic reactions and reducing energy consumption of the electrolyzer.

In some possible implementations, a central angle between two outermost anode electrolyte distribution channels among the at least two anode electrolyte distribution channels ranges from 60° to 180°, and/or a central angle between two outermost cathode electrolyte distribution channels among the at least two cathode electrolyte distribution channels ranges from 60° to 180°. In this way, diffusion ranges of the electrolyte in the anode compartments and the cathode compartments are expanded, and distribution uniformity is improved.

In some possible implementations, the electrolyte distribution channels have a T-shaped channel structure. In this way, the T-shaped channel structure has a radial segment and an axial segment that are perpendicular to each other and communicate with each other. The electrolyte first enters the radial segment of the T-shaped channel structure along the radial direction of the annular frame body, and then enters the axial segment such that the electrolyte is distributed to the two sides. The electrolyte distribution channel is simple in structure and convenient to fabricate and manufacture.

In some possible implementations, the gas outlets include oxygen outlets and hydrogen outlets. The oxygen outlets communicate with oxygen collection channels provided in the annular frame body, and the hydrogen outlets communicate with hydrogen collection channels provided in the annular frame body. In this way, a mixed fluid of an oxygen collected in the oxygen collection channels and the electrolyte is discharged from the electrolyzer through the oxygen outlets, and a mixed fluid of a hydrogen collected in the hydrogen collection channels and the electrolyte is discharged from the electrolyzer through the hydrogen outlets, thereby realizing separate discharge and improving purity of produced gases.

In some possible implementations, an outer diameter of the annular frame body ranges from 2 m to 3 m, and a radial thickness of the annular frame body ranges from 20 cm to 30 cm. The annular frame body has a large outer diameter, and belongs to a large-scale electrolyzer. The radial thickness of the annular frame body can satisfy a depth requirement of the mounting holes, thereby improving strength of connection to the external pipes.

According to a second aspect, the present application further provides an electrolyzer, including two endplates and a plurality of electrode plate assemblies located between the two endplates. An electrolysis compartment is defined between every two adjacent electrode plate assemblies. At least one of the plurality of electrode plate assemblies includes the electrode plate frame as described above.

Because the electrolyzer uses the electrode plate frame the same as that in the first aspect, the electrolyzer has beneficial effects the same as those of the electrode plate frame, and details are not described herein again.

In some possible implementations, at least one of the plurality of electrode plate assemblies located at two ends includes the electrode plate frame according to the first aspect. In this way, joints where the electrolyzer is connected to external pipes are all located on the electrode plate frame of the electrode plate assembly at an end of the electrolyzer. An electrolyte is fed from one end of the electrolyzer and then toward the other end into electrolysis compartments. Correspondingly, gases produced by electrolysis are also discharged from the electrode plate frame of the electrode plate assembly at the end of the electrolyzer.

In some possible implementations, two outermost electrode plate assemblies among the plurality of electrode plate assemblies are respectively a positive electrode plate assembly and a negative electrode plate assembly. The positive electrode plate assembly and the negative electrode plate assembly are respectively disposed immediately adjacent to one of the two endplates. The negative electrode plate assembly includes the electrode plate frame. In this way, the joints where the electrolyzer is connected to the external pipes are all located on the electrode plate frame of the negative electrode plate assembly at one end of the electrolyzer. The electrolyte is fed from the negative electrode plate assembly and then flows toward the positive electrode plate assembly. During this process, the electrolyte is fed into the electrolysis compartments. Correspondingly, gases produced by electrolysis are also discharged from the electrode plate frame of the negative electrode plate assembly at the end of the electrolyzer.

In some possible implementations, two outermost electrode plate assemblies among the plurality of electrode plate assemblies are both negative electrode plate assemblies. One electrode plate assembly located in a middle among the plurality of electrode plate assemblies is a positive electrode plate assembly. Each of the negative electrode plate assemblies includes the electrode plate frame. In this way, the joints where the electrolyzer is connected to the external pipes are all located on electrode plate frames of the negative electrode plate assemblies at two ends of the electrolyzer. The electrolyte is fed from the negative electrode plate assemblies at the two ends of the electrolyzer and then flows toward an intermediate region into the electrolysis compartments. Correspondingly, gases produced by electrolysis are also discharged from the electrode plate frames of the negative electrode plate assemblies at the two ends of the electrolyzer.

In some possible implementations, an electrode plate assembly located in an intermediate position among the plurality of electrode plate assemblies includes the electrode plate frame. In this way, the joints where the electrolyzer is connected to the external pipes are all located on the electrode plate frame of the electrode plate assembly in the intermediate region of the electrolyzer. The electrolyte is fed from the intermediate region of the electrolyzer and then toward the two ends into the electrolysis compartments. Correspondingly, gases produced by electrolysis are also discharged from the electrode plate frame of the electrode plate assembly in the intermediate region of the electrolyzer. In this way, the electrolyte enters a chamber in the electrode plate frame from at least one position in the intermediate region of the electrolyzer. Then, the electrolyte is distributed from anode electrolyte distribution channels and cathode electrolyte distribution channels to two sides to respectively enter anode compartments and cathode compartments, so that a distribution path of the electrolyte is shortened, and rapid distribution of the electrolyte can be implemented.

In some possible implementations, at least one electrode plate assembly including the electrode plate frame further includes two flat plates. The two flat plates are fixed to an edge of the electrode plate frame in parallel and at an interval. The electrode plate frame and the two flat plates define an electrolyte chamber.

### BRIEF DESCRIPTION OF THE DRAWINGS

The accompanying drawings described herein are used to provide a further understanding of the present application, and constitute a part of the present application. Exemplary embodiments of the present application and descriptions thereof are used to explain the present application, and do not constitute an improper limitation to the present application. In the drawings:
FIG. 1 is a schematic structural diagram of an electrode plate frame according to an embodiment of the present application;
FIG. 2 is a schematic partial enlarged view of the electrode plate frame according to an embodiment of the present application;
FIG. 3 is a schematic front view of the electrode plate frame according to an embodiment of the present application;
FIG. 4 is a schematic structural diagram of an electrolyzer according to an embodiment of the present application;
FIG. 5 is a schematic structural diagram of another electrolyzer according to an embodiment of the present application;
FIG. 6 is a schematic structural diagram of still another electrolyzer according to an embodiment of the present application;
FIG. 7 is a schematic diagram of an internal structure of the electrolyzer according to an embodiment of the present application;
FIG. 8 is a schematic diagram showing flows of fluids of the electrolyzer according to an embodiment of the present application;
FIG. 9 is a schematic side sectional view of an intermediate electrode plate assembly according to an embodiment of the present application; and
FIG. 10 is a schematic structural diagram of an electrode plate frame of a bipolar plate according to an embodiment of the present application.

Reference numerals: 1: annular frame body, 11: electrolyte inlet, 12: chamber, 13: electrolyte distribution channel, 1301: anode electrolyte distribution channel, 1302: cathode electrolyte distribution channel, 131: electrolyte feed groove, 1311: anode electrolyte feed groove, 1312: cathode electrolyte feed groove, 14: avoidance notch, 15: flange face, 16: mounting hole, 17: oxygen outlet, 18: oxygen collection channel, 181: oxygen guide groove, 19: hydrogen outlet, 110: hydrogen collection channel, 111: flat plate, 2: endplate, 3: electrode plate assembly, 301: oxygen discharge channel, 3011: oxygen passage slot, 302: hydrogen discharge channel, 3021: hydrogen passage slot, 303: anode channel, 3031: anode compartment passage slot, 304: cathode channel, 3041: cathode compartment passage slot, 4: tie bolt, 5: oxygen pipe, 6: hydrogen pipe, and 7: electrolyte pipe.

### DETAILED DESCRIPTION

To make technical problems to be resolved, technical solutions, and beneficial effects of the present application clearer and more comprehensible, the present application is further described in detail below with reference to the accompanying drawings and embodiments. It should be understood that the specific embodiments described herein are merely used for explaining the present application but are not intended to limit the present application.

It should be noted that when an element is referred to as being "fixed to" or "disposed on" another element, the element is directly on the another element or indirectly on the another element. When an element is referred to as being "connected to" another element, the element is directly connected to the another element or indirectly connected to the another element.

In addition, the terms "first" and "second" are merely used fora purpose of description, and cannot be understood as indicating or implying relative importance or implicitly specifying a number of indicated technical features. Therefore, a feature defined by "first" or "second" may explicitly or implicitly include one or more of the features. In description of the present application, "a plurality of" means two or more, unless otherwise specifically limited. Unless otherwise explicitly and specifically limited, "several" means one or more.

In the description of the present application, it should be understood that orientations or positional relationships indicated by terms such as "upper", "lower", "front", "rear", "left", and "right" are based on orientations or positional relationships shown in the accompanying drawings, and are merely for ease of describing the present application and simplifying description, but do not indicate or imply that an indicated apparatus or element must have a particular orientation or be constructed or operated in a particular orientation, and thus should not be construed as limiting the present application.

In the description of the present application, it should be noted that unless otherwise clearly specified and limited, terms such as "mount", "connect", and "couple" should be understood broadly, which, for example, can refer to a fixed connection, a detachable connection, or an integral connection; which can refer to a mechanical connection or an electrical connection; which can refer to a direct connection or an indirect connection via an intermediate medium; and which can also refer to a communication between insides of two elements or an interactive relationship between two elements. A person of ordinary skill in the art can understand specific meanings of the foregoing terms in the present application according to specific situations.

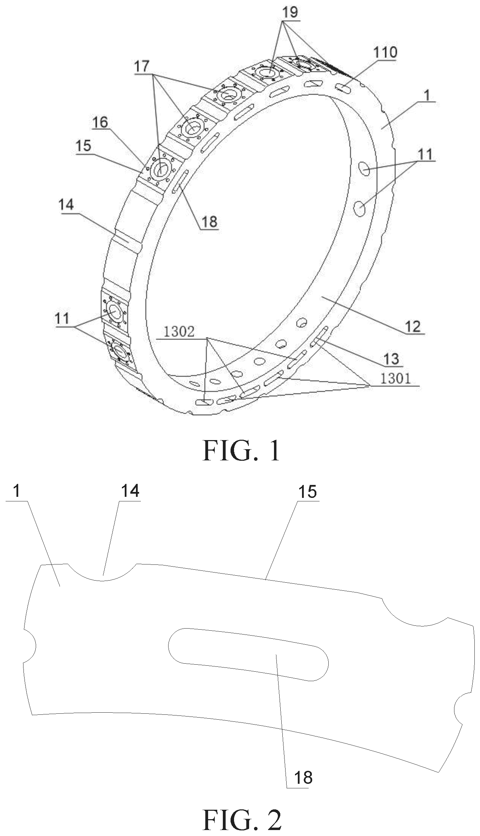

Referring to FIG. 1 to FIG. 3, an embodiment of the present application provides an electrode plate frame, including an annular frame body 1. An outer peripheral surface of the annular frame body 1 is provided with one or a plurality of fluid inlets/outlets, such as electrolyte inlets 11, hydrogen outlets 19, and oxygen outlets 17. Mounting holes 16 are provided around each of the plurality of fluid inlets/outlets on the outer peripheral surface of the annular frame body 1 such that each fluid inlet/outlet and corresponding mounting holes 16 form a flange structure for connecting to an external pipe. The mounting holes 16 is threaded holes. A quantity of the mounting holes is the same as a quantity of connection holes of a flange of the external pipe. It should be noted that when the annular frame body 1 is a circular annular frame body, the outer peripheral surface of the annular frame body 1 is an outer circumferential surface of the annular frame body 1, and an inner peripheral surface of the annular frame body 1 is an inner circumferential surface of the annular frame body 1.

When the foregoing technical solution is adopted, since the mounting holes 16 are directly provided around the fluid inlet/outlet and the mounting holes 16 are located on the outer peripheral surface of the annular frame body, the flange structure is directly integrally formed on the annular frame body 1, and the fluid inlet/outlet is connected to the external pipe by using the flange structure. Compared with an existing manner of welding pipes at the inlets/outlets, in the present application, the fluid inlets/outlets of the annular frame body 1 do not require welding and have no welding joints, so as to avoid residual stress caused by welding and thus stress corrosion and also avoid galvanic corrosion caused by a welding material being different from materials of the pipe and the electrode plate frame, thereby reducing a leakage risk at joints between the electrode plate frame and external pipes.

Further, in some embodiments, a flange face 15 of the flange structure is a flat surface. In this way, during manufacturing, the outer peripheral surface of the annular frame body 1 corresponding to the flange structure is cut to obtain a flat flange face 15, so that the flange structure is in contact with a flange of the external pipe more closely and securely, thereby further reducing the leakage risk at the joints between the electrode plate frame and the external pipes. Certainly, the flange face 15 of the flange structure is reserved as an arc surface of the annular frame body 1 and is not cut, and during assembly with the external pipe, a flange that is closely fit with the arc surface is selected.

As shown in FIG. 1 to FIG. 3, in some embodiments, the outer peripheral surface of the annular frame body 1 is provided with a plurality of avoidance notches 14 arranged at intervals along a circumferential direction. Extension directions of the avoidance notches 14 are parallel to an axis of the annular frame body 1. The avoidance notches 14 are configured to accommodate and avoid tie bolts 4 of an electrolyzer. Cross sections of the avoidance notches 14 are arc-shaped, rectangular, or trapezoidal, as long as the tie bolts 4 can be accommodated and avoided. A quantity of the avoidance notches 14 is the same as a quantity of the tie bolts 4, and corresponds one-to-one in an arrangement position on a circumference, or the quantity of the avoidance notches 14 is greater than the quantity of the tie bolts 4. Because the mounting holes 16 need to be radially provided in the annular frame body 1, to enable the mounting holes 16 to have an effective connection depth and prevent the mounting holes 16 from penetrating channels in the annular frame body 1, such as hydrogen collection channels, oxygen collection channels, or electrolyte distribution channels, a radial thickness of the annular frame body 1 needs to be increased, and correspondingly, on the premise of not reducing an internal space of the electrolyzer, i.e., not reducing an inner diameter of the annular frame body 1, an outer diameter of the annular frame body 1 needs to be increased. Conventionally, when the outer diameter of the annular frame body 1 is increased, a distributed circumferential diameter of the tie bolts 4 needs to be correspondingly increased. Correspondingly, to fix two ends of the tie bolts 4, a diameter of the endplates 2 also needs to be increased. However, this will increase material costs. Therefore, in the present application, in order not to increase production costs, the avoidance notches 14 are provided in areas on the outer peripheral surface of the annular frame body 1 that interfere with the tie bolts 4 while not increasing the distributed circumferential diameter of the tie bolts 4 and the diameter of the endplates 2, so as to reduce a total weight and material costs of the annular frame body and the electrolyzer.

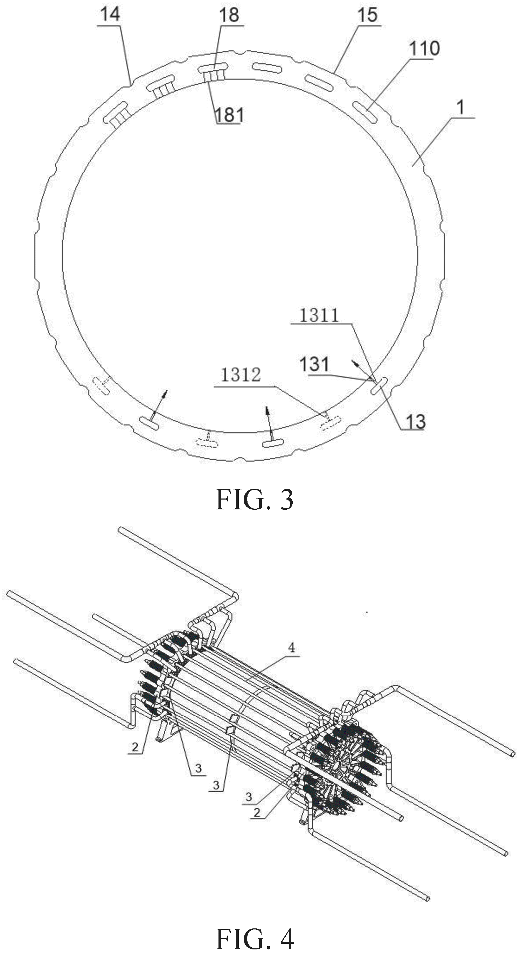

As shown in FIG. 1 and FIG. 3, in some possible implementations, the plurality of fluid inlets/outlets include gas outlets and/or electrolyte inlets 11. The electrolyte inlets 11 are configured to feed the electrolyte in external pipes into an electrolyzer. That is, it is possible that only the gas outlets are provided as flange structures, or that only the electrolyte inlets 11 are provided as flange structures, or that the gas outlets and the electrolyte inlets 11 are all provided as flange structures. In this way, the gas outlets and/or the electrolyte inlets 11 in the annular frame body 1 that are configured to connect to the external pipes can all be provided as the flange structures, thereby reducing the leakage risk at the joints between the electrode plate frame and the external pipes.

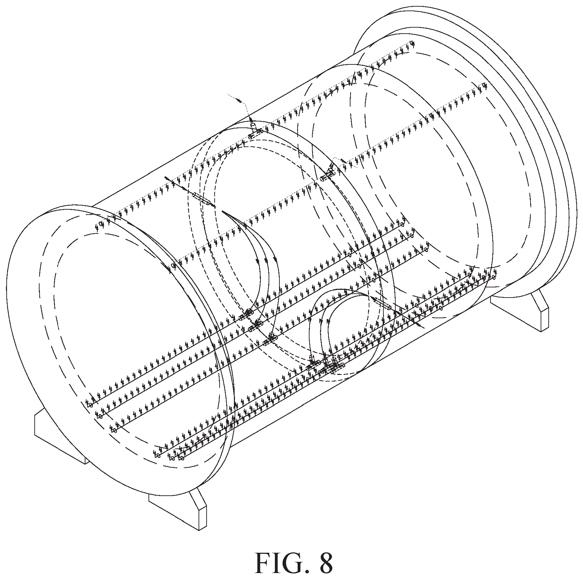

As shown in FIG. 1 and FIG. 3, in some embodiments, the electrolyte inlets 11 extend through the annular frame body 1 along a radial direction of the annular frame body 1. The annular frame body 1 is further provided with electrolyte distribution channels 13 Inlets of the electrolyte distribution channels 13 are provided on an inner peripheral surface of the annular frame body 1, i.e., the inlets of the electrolyte distribution channels 13 are distributed on the inner peripheral surface of the annular frame body 1. Outlets of the electrolyte distribution channels 13 are provided on two end surfaces of the annular frame body 1, i.e., the outlets of the electrolyte distribution channels 13 are distributed on the two end surfaces of the annular frame body 1 in an axial direction. In this way, as shown in FIG. 8, the electrolyte enters a chamber 12 inside an inner ring of the annular frame body 1 from the electrolyte inlets 11, and then enters the electrolyte distribution channels 13 from the chamber 12, such that the electrolyte is distributed to electrolysis compartments located on two sides of the electrode plate frame through the electrolyte distribution channels 13. An entry and distribution manner of the electrolyte enables the electrolyte to be quickly and evenly added to the electrolysis compartments, thereby alleviating a concentration polarization during electrolysis, reducing energy consumption of the electrolyzer, and increasing a current density.

Further, the electrolyte distribution channels 13 have a T-shaped channel structure. In this way, the T-shaped channel structure has a radial segment and an axial segment that are perpendicular to each other and communicate with each other. The radial segment is disposed along the radial direction of the annular frame body 1. Two ends of the radial segment respectively communicate with the chamber and the axial segment. The axial segment extends through the two end surfaces of the annular frame body 1 along the axial direction of the annular frame body 1. The electrolyte first enters the radial segment of the T-shaped channel structure along the radial direction of the annular frame body 1, and then enters the axial segment such that the electrolyte is distributed to the two sides. The electrolyte distribution channel is simple in structure and convenient to fabricate and manufacture. A cross section of the radial segment is circular, elliptical, square, triangular, etc. A cross section of the axial segment is oblong, circular, elliptical, square, triangular, etc. Certainly, the electrolyte distribution channels 13 are also in another structural form, which is not limited to those listed in this embodiment, as long as the electrolyte can be distributed from the chamber 12 to the electrolysis compartments on the two sides.

As shown in FIG. 1 and FIG. 3, the gas outlets include oxygen outlets 17 and hydrogen outlets 19. The oxygen outlets 17 communicate with oxygen collection channels 18 provided in the annular frame body 1, and the hydrogen outlets 19 communicate with hydrogen collection channels 110 provided in the annular frame body 1. The oxygen collection channels 18 and the hydrogen collection channels 110 are provided at an upper part of the annular frame body 1. The oxygen collection channels 18 and the hydrogen collection channels 110 all extend through the two end surfaces of the annular frame body 1 along the axial direction of the annular frame body 1. In addition, the oxygen collection channel 18 communicates with an anode compartment through an oxygen guide groove 181 provided on one end surface of the annular frame body 1 close to the anode compartment. The hydrogen collection channel 110 communicates with a cathode compartment through a guide groove provided on one end surface of the annular frame body 1 close to the cathode compartment. Sectional shapes of the oxygen collection channels 18 and the hydrogen collection channels 110 are slotted, circular, elliptical, square, triangular, etc. A mixed fluid of an oxygen collected in the oxygen collection channels 18 and the electrolyte is discharged into an external oxygen pipe through the oxygen outlets 17, and a mixed fluid of a hydrogen collected in the hydrogen collection channels 110 and the electrolyte is discharged into an external hydrogen pipe through the hydrogen outlets 19, thereby realizing separate discharge of oxygen and hydrogen and improving purity of produced gases.

In some possible implementations, an outer diameter of the annular frame body 1 ranges from 2 m to 3 m, and a radial thickness of the annular frame body 1 ranges from 20 cm to 30 cm. The annular frame body 1 has a large outer diameter, and belongs to a large-scale electrolyzer. The radial thickness of the annular frame body 1 can satisfy a depth requirement of the mounting holes 16, thereby improving a strength of connection to the external pipes.

As shown in FIG. 4 to FIG. 6, the present application described based on any one of the foregoing embodiments further provides an electrolyzer. The electrolyzer includes two endplates 2 and a plurality of electrode plate assemblies 3 located between the two endplates 2. Each of the plurality of electrode plate assemblies 3 includes an electrode plate frame and electrode plates fixed in the electrode plate frame. By applying a pressing force to the endplates 2 at the two ends through the tie bolts 4, the plurality of electrode plate assemblies 3 are pressed and sealed to each other. An electrolysis compartment is defined between every two adjacent electrode plate assemblies 3. At least one electrode plate assembly 3 in the electrode plate assemblies 3 includes the electrode plate frame described in any one of the foregoing embodiments.

The electrode plate frame of the electrode plate assembly 3 connected to the external pipes in the electrolyzer includes the electrode plate frame described in any one of the foregoing embodiments. Therefore, the fluid inlets/outlets do not require welding and have no welding joints, so as to avoid residual stress caused by welding and thus stress corrosion and also avoid galvanic corrosion caused by a welding material being different from materials of the pipe and the electrode plate frame, thereby reducing the leakage risk at the joints between the electrode plate frame and the external pipes.

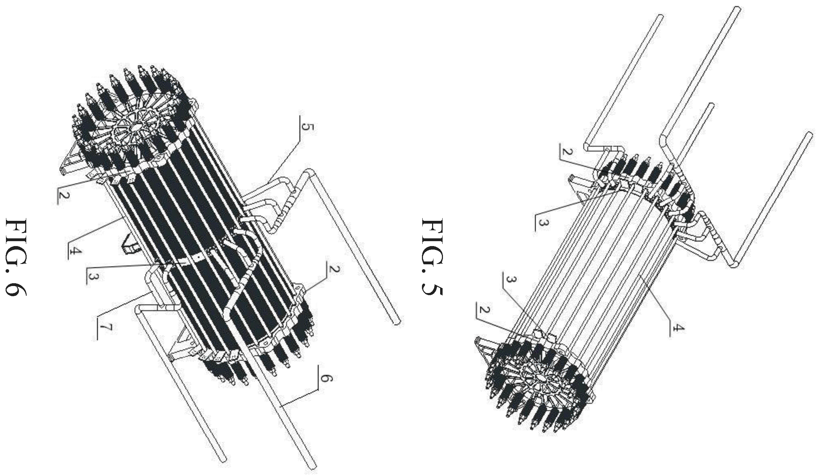

As shown in FIG. 4 and FIG. 5, the electrode plate frame of at least one electrode plate assembly 3 located at two ends in the plurality of electrode plate assemblies 3 between the two endplates 2 includes the electrode plate frame described in any one of the foregoing embodiments. That is, the external pipes are all connected to the at least one electrode plate assembly 3 located at the end of the electrolyzer. In this way, joints where the electrolyzer is connected to the external pipes are all located on the electrode plate frame of the electrode plate assembly 3 at an end of the electrolyzer. The electrolyte is fed from one end of the electrolyzer and then toward the other end into the electrolysis compartments. Correspondingly, gases produced by electrolysis are also discharged from the electrode plate frame of the electrode plate assembly 3 at the end of the electrolyzer.

For example, as shown in FIG. 5, two outermost electrode plate assemblies 3 among the plurality of electrode plate assemblies 3 between the two endplates 2 are respectively a positive electrode plate assembly and a negative electrode plate assembly. The positive electrode plate assembly includes a positive electrode plate and the electrode plate frame. The negative electrode plate assembly includes a negative electrode plate and the electrode plate frame. The remaining electrode plate assemblies 3 are all bipolar plate assemblies. The positive electrode plate assembly is disposed immediately adjacent to the endplate 2 at one end. The negative electrode plate assembly is disposed immediately adjacent to the endplate 2 at the other end. The bipolar plate assemblies are located between the positive electrode plate assembly and the negative electrode plate assembly. The electrolysis compartments are defined between the positive electrode plate assembly and the adjacent bipolar plate assembly, between every two adjacent bipolar plate assemblies, and between the negative electrode plate assembly and the adjacent bipolar plate assembly. Two sides of the bipolar plate assembly respectively define an anode compartment and a cathode compartment. One side of the positive electrode plate assembly defines an anode compartment. One side of the negative electrode plate assembly defines a cathode compartment. The anode compartments and the cathode compartments are alternately arranged in the electrolyzer. The electrode plate frame of the negative electrode plate assembly located at one end adopts the electrode plate frame described in any one of the foregoing embodiments.

In this way, the joints where the electrolyzer is connected to the external pipes are all provided on the electrode plate frame of the negative electrode plate assembly at one end of the electrolyzer. The electrolyte is fed from the negative electrode plate assembly into the chamber 12 and then flows toward the positive electrode plate assembly. During this process, the electrolyte is fed into the electrolysis compartments. Correspondingly, gases produced by electrolysis are also discharged from the electrode plate frame of the negative electrode plate assembly at the end of the electrolyzer.

In another example, as shown in FIG. 4, two outermost electrode plate assemblies 3 among the plurality of electrode plate assemblies 3 between the two endplates 2 are both negative electrode plate assemblies. The negative electrode plate assembly includes a negative electrode plate and the electrode plate frame. One electrode plate assembly 3 located in a middle is a positive electrode plate assembly. The remaining electrode plate assemblies are all bipolar plate assemblies. One of the negative electrode plate assemblies is disposed immediately adjacent to the endplate 2 at one end. The other negative electrode plate assembly is disposed immediately adjacent to the endplate 2 at the other end. The bipolar plate assemblies are located between the positive electrode plate assembly and the negative electrode plate assembly. The electrode plate frames of the two negative electrode plate assemblies located at the two ends both adopt the electrode plate frame described in any one of the foregoing embodiments.

In this way, the electrolyte enters the respective chambers 12 from the negative electrode plate assemblies at the two ends, and then flows from the two ends to the positive electrode plate assembly located in the intermediate region. During this process, the electrolyte is fed into the electrolysis compartments. Correspondingly, gases produced by electrolysis are also discharged from the electrode plate frames of the negative electrode plate assemblies at the two ends of the electrolyzer. In this way, for a large-scale electrolyzer having a large length, the electrolyte is simultaneously distributed to the intermediate region from the two ends, which can improve a distribution speed and distribution uniformity of the electrolyte and improve an electrolysis efficiency.

As shown in FIG. 6, in some embodiments, the electrode plate frame of an electrode plate assembly 3 in an intermediate position among the plurality of electrode plate assemblies 3 between the two endplates 2 adopts the electrode plate frame described in any one of the foregoing embodiments. In this way, the joints where the electrolyzer is connected to the external pipes are all provided on the electrode plate frame of the electrode plate assembly 3 in the intermediate region of the electrolyzer. The electrolyte is fed from the intermediate region of the electrolyzer and then toward the two ends into the electrolysis compartments. Correspondingly, gases produced by electrolysis are also discharged from the electrode plate frame of the electrode plate assembly 3 in the intermediate region of the electrolyzer. In this way, for a large-scale electrolyzer having a large length, the electrolyte is distributed from the intermediate region to the two sides, which can improve the distribution speed and distribution uniformity of the electrolyte and improve the electrolysis efficiency.

For example, as shown in FIG. 6, two outermost electrode plate assemblies 3 among the plurality of electrode plate assemblies 3 between the two endplates 2 are respectively a positive electrode plate assembly and a negative electrode plate assembly. One electrode plate assembly in the middle in the plurality of electrode plate assemblies 3 is a bipolar plate assembly. The electrode plate frame of an electrode plate assembly 3 in the intermediate position adopts the electrode plate frame described in any one of the foregoing embodiments. In this way, the joints where the electrolyzer is connected to the external pipes are all located on the electrode plate frame of the bipolar plate assembly in the intermediate region of the electrolyzer. The electrolyte is fed from the electrode plate assembly in the intermediate region of the electrolyzer and then toward the two ends into the electrolysis compartments. Correspondingly, gases produced by electrolysis are also discharged from the electrode plate frame of the bipolar plate assembly in the intermediate region of the electrolyzer.

Referring to FIG. 1 to FIG. 3 and FIG. 6 to FIG. 8, an embodiment of the present application provides an electrolyzer, including two endplates 2 arranged along a first direction and a plurality of electrode plate assemblies 3 located between the two endplates 2. By applying a tension force to the two endplates 2 through tie bolts 4, the plurality of electrode plate assemblies 3 located between the two endplates 2 are pressed and sealed with each other. At least one of the plurality of electrode plate assemblies 3 is an intermediate bipolar plate assembly. There are one, two, three, or more intermediate bipolar plate assemblies, and every two adjacent intermediate bipolar plate assemblies are disposed at an interval. The two electrode plate assemblies 3 respectively immediately adjacent to the two endplates 2 are monopolar plate assemblies, and a monopolar plate of each of the monopolar plate assemblies has only one electrode on one side. The remaining electrode plate assemblies 3 located between the monopolar plate assemblies and the intermediate bipolar plate assembly and the electrode plate assemblies 3 located between every two adjacent intermediate bipolar plate assemblies are bipolar plate assemblies. Every two adjacent electrode plate assemblies 3 are sealed to define an anode compartment and a cathode compartment. One side of the bipolar plate assembly faces the anode compartment, and the other side faces the cathode compartment. Two sides of the intermediate bipolar plate assembly respectively correspond to the anode compartment and the cathode compartment, and one side of the monopolar plate assembly corresponds to the anode compartment or the cathode compartment. The anode compartments and the cathode compartments in the electrolyzer are alternately arranged.

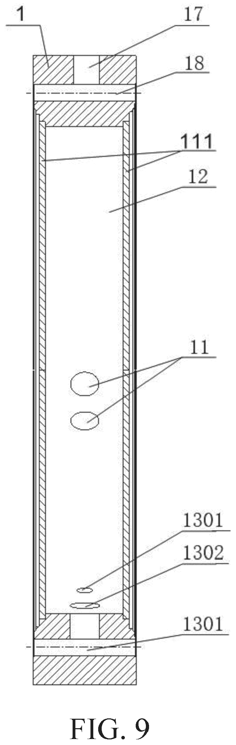

The intermediate bipolar plate assembly includes an intermediate electrode plate frame and two flat plates 111. As shown in FIG. 1 to FIG. 3 and FIG. 9, the intermediate electrode plate frame has an annular frame body structure. The two flat plates 111 are fixed to an edge of the intermediate electrode plate frame in parallel and at an interval. The intermediate electrode plate frame and the two flat plates 111 define a chamber 12. The two flat plates 111 respectively serve as two electrode plates. A side of one flat plate 111 facing away from the chamber 12 corresponds to one anode compartment, and a side of the other flat plate 111 facing away from the chamber 12 corresponds to one cathode compartment.

The intermediate electrode plate frame is provided with electrolyte inlets 11, at least one anode electrolyte distribution channel 1301, and at least one cathode electrolyte distribution channel 1302. The electrolyte inlets 11 are provided on an outer periphery of the intermediate electrode plate frame, and two ends of the electrolyte inlet 11 respectively communicate with the chamber 12 and an external electrolyte pipe 7. Inlets of the anode electrolyte distribution channel 1301 and the cathode electrolyte distribution channel 1302 all communicate with the chamber 12. An outlet of the anode electrolyte distribution channel 1301 communicates with the anode compartment, and an outlet of the cathode electrolyte distribution channel 1302 communicates with the cathode compartment. The anode electrolyte distribution channels 1301 and the cathode electrolyte distribution channels 1302 are alternately arranged along a circumferential direction of the intermediate electrode plate frame. That is, when there are at least two anode electrolyte distribution channels 1301 and at least two cathode electrolyte distribution channels 1302, every two anode electrolyte distribution channels 1301 are separated by one cathode electrolyte distribution channel 1302, and every two cathode electrolyte distribution channels 1302 are separated by one anode electrolyte distribution channel 1301. A quantity of the anode electrolyte distribution channels 1301 is one, two, three, four, five or more, and a quantity of the cathode electrolyte distribution channels 1302 is one, two, three, four, five or more. A quantity of the anode electrolyte distribution channels 1301 and a quantity of the cathode electrolyte distribution channels 1302 is the same, or is different from each other by one, with either the anode electrolyte distribution channels or the cathode electrolyte distribution channels at two ends. The anode electrolyte distribution channel 1301 communicates with the anode compartment through an anode electrolyte feed groove 1311 provided on one end surface of the intermediate electrode plate frame corresponding to the anode compartment, and the cathode electrolyte distribution channel 1302 communicates with the cathode compartment through the cathode electrolyte feed groove 1312 provided on the other end surface of the intermediate electrode plate frame corresponding to the cathode compartment.

During operation, referring to flow arrows (shown by solid lines) of the electrolyte in FIG. 8, the electrolyte delivered in the electrolyte pipe 7 enters the chamber 12 in the intermediate electrode plate frame through the electrolyte inlets 11 on the at least one intermediate bipolar plate assembly of the electrolyzer, and then the electrolyte is distributed from the anode electrolyte distribution channels 1301 and the cathode electrolyte distribution channels 1302 to the two sides to respectively enter the anode compartments and the cathode compartments for electrolysis.

It can be seen from the above that an entry of the electrolyte from at least one position of the electrolyzer that is located between the endplates is implemented through the at least one intermediate bipolar plate assembly, so that a distribution path of the electrolyte is shortened. When one intermediate bipolar plate assembly is located in the intermediate region of the electrolyzer, the distribution path of the electrolyte can be shortened to one half of a length of the electrolyzer, thereby implementing rapid distribution of the electrolyte. When there are at least two anode electrolyte distribution channels and at least two cathode electrolyte distribution channels, because the anode electrolyte distribution channels 1301 and the cathode electrolyte distribution channels 1302 are alternately arranged along a circumferential direction of the intermediate electrode plate frame, the electrolyte can diffuse into anode compartments and cathode compartments via a plurality of points within a large central angle range of the electrode plate assemblies 3, so that distribution flow fields of the electrolyte in the anode compartment and the cathode compartment are more uniform, thereby improving uniformity of electrolytic reactions and reducing energy consumption of electrolysis. In addition, the electrolyte enters the anode compartments and the cathode compartments via the plurality of points within a large range, so that thermal field distribution in the electrolysis compartment is more uniform, and flow fields and thermal fields of the adjacent anode compartment and the cathode compartment are basically symmetrical with respect to a separator, thereby improving an electrolysis efficiency.

As shown in FIG. 1 to FIG. 3, FIG. 6 to FIG. 7, and FIG. 9, in some embodiments, a quantity of the electrolyte inlets 11 is at least two. At least one electrolyte inlet 11 is located at a middle position of the intermediate electrode plate frame in a vertical direction, and the remaining electrolyte inlets 11 are located at an upper part and/or a lower part of the intermediate electrode plate frame.

For example, the quantity of the electrolyte inlets 11 is four. Two of the electrolyte inlets 11 are located at two ends of the intermediate electrode plate frame in a horizontal diameter direction, and the other two electrolyte inlets are respectively located below or above the two ends in the horizontal diameter direction. Certainly, the quantity of the electrolyte inlets 11 is one, two, three, or more. In this way, when the electrolyte inlet 11 is located at a middle upper part of the intermediate electrode plate frame, the electrolyte enters the chamber 12 from the middle upper part of the intermediate electrode plate frame, so that some heat in this area can be taken away, thereby promoting more uniform temperature at the intermediate electrode plate frame and the electrolysis compartments around the intermediate electrode plate frame. When the electrolyte inlet 11 is located at a middle lower part of the intermediate electrode plate frame, the electrolyte inlet 11 is staggered from the gas outlet at a top of the intermediate electrode plate frame by a particular distance, thereby facilitating arrangement of the external pipes.

Further, in some embodiments, the electrolyte inlets 11 extend through an inner peripheral surface and an outer peripheral surface of the intermediate electrode plate frame along a radial direction of the intermediate electrode plate frame, thereby facilitating positioning and fabrication of the electrolyte inlets 11. Certainly, the electrolyte inlets 11 can alternatively extend through the inner peripheral surface and the outer peripheral surface of the intermediate electrode plate frame obliquely to the radial direction of the intermediate electrode plate frame, which means that an extending-through direction of the electrolyte inlet 11 forms an angle with the radial direction of the intermediate electrode plate frame.

As shown in FIG. 1 to FIG. 3, FIG. 7, and FIG. 9, the anode electrolyte distribution channels 1301 and the cathode electrolyte distribution channels 1302 both include a radial segment and an axial segment. The radial segment extends along a radial direction of the intermediate electrode plate frame, and the axial segment extends through two end surfaces of the intermediate electrode plate frame along an axial direction of the intermediate electrode plate frame, to form a T-shaped channel structure. Two ends of the radial segment respectively communicate with the chamber 12 and the axial segment. The axial segment of the anode electrolyte distribution channel 1301 communicates with the anode compartment, and the axial segment of the cathode electrolyte distribution channel 1302 communicates with the cathode compartment. Specifically, the radial segment of the anode electrolyte distribution channel 1301 communicates with the chamber 12 through the anode electrolyte feed groove 1311, and the radial segment of the cathode electrolyte distribution channel 1302 communicates with the chamber 12 through the cathode electrolyte feed groove 1312. In this way, the electrolyte in the chamber 12 enters the anode electrolyte distribution channels 1301 and the cathode electrolyte distribution channels 1302 through the radial segment, and then is distributed, through the axial segment, to the anode compartment and the cathode compartment between the electrode plate assemblies 3 on two sides of the intermediate electrode plate frame. The anode electrolyte distribution channels 1301 and the cathode electrolyte distribution channels 1302 are simple in structure, and can be fabricated along the axial direction at one time, thereby facilitating fabrication and manufacturing.

Exemplarily, a sectional shape of the axial segment that is perpendicular to the axial direction of the intermediate electrode plate frame is circular, elliptical, oblong, or polygonal, which is specifically triangular, square, or the like. A cross section of the radial segment is circular, elliptical, or polygonal, which is specifically triangular, square, or the like. Certainly, the anode electrolyte distribution channels 1301 and the cathode electrolyte distribution channels 1302 are also in another structural form, which is not limited to those listed in this embodiment, as long as the electrolyte can be distributed from the chamber 12 to the electrolysis compartments on the two sides.

As shown in FIG. 1 to FIG. 3, FIG. 7 to FIG. 8, and FIG. 9, at least one anode electrolyte distribution channel 1301 and at least one cathode electrolyte distribution channel 1302 are located at the lower part of the intermediate electrode plate frame, i.e., at the lower half part of the intermediate electrode plate frame. In this way, the electrolyte entering from the electrolyte inlet 11 is continuously distributed to a lower part of the anode compartments and the cathode compartments. The electrolyte gradually flows from the lower part to the upper part. During this process, the electrolytic reaction is performed.

Exemplarily, a central angle between the two outermost anode electrolyte distribution channels among the at least two anode electrolyte distribution channels 1301 ranges from 60° to 180°, and similarly, a central angle between two outermost cathode electrolyte distribution channels among the at least two cathode electrolyte distribution channels 1302 ranges from 60° to 180°, so as to expand a diffusion range of the electrolyte in the anode compartment and the cathode compartment and improve distribution uniformity.

Exemplarily, there is at least one hydrogen collection channel 110 and at least one oxygen collection channel 18. The quantities are specifically one, two, three, four, or more. The quantities of hydrogen collection channels 110 and the oxygen collection channels 18 is the same or different. In addition, the hydrogen collection channel 110 and the oxygen collection channel 18 are respectively located at two sides of a vertical radial section of the intermediate electrode plate frame. The vertical radial section passes through an axis of the intermediate electrode plate frame. In this way, it is convenient to separately arrange a hydrogen pipe 6 connected to the hydrogen collection channel 110 and an oxygen pipe 5 connected to the oxygen collection channel 18, thereby preventing the pipes from crossing and interfering with one another.

Further, in this embodiment, the hydrogen collection channels 110 and the oxygen collection channels 18 both include a radial segment and an axial segment. The radial segment extends through the outer peripheral surface of the intermediate electrode plate frame along the radial direction of the intermediate electrode plate frame. The axial segment extends through the two end surfaces of the intermediate electrode plate frame along the axial direction of the intermediate electrode plate frame. The radial segment communicates with the axial segment. The axial segment of the oxygen collection channel 18 communicates with the anode compartment. Specifically, the axial segment of the oxygen collection channel 18 communicates with the anode compartment through the oxygen guide groove 181 provided on one end surface of the intermediate electrode plate frame close to the anode compartment. The axial segment of the hydrogen collection channel 110 communicates with the cathode compartment. Specifically, the axial segment of the hydrogen collection channel 110 communicates with the cathode compartment through the hydrogen guide groove (not shown in the figure, facing away from the oxygen guide groove 181 in FIG. 6) on the other end surface of the intermediate electrode plate frame close to the cathode compartment. In this way, the hydrogen collection channels 110 and the oxygen collection channels 18 have a T-shaped channel structure, which is simple in structure and can be fabricated along the axial direction at one time, thereby facilitating manufacturing.

Exemplarily, a sectional shape of the axial segment that is perpendicular to the axial direction of the intermediate electrode plate frame is circular, elliptical, oblong, or polygonal, which is specifically triangular, square, or the like. A cross section of the radial segment is circular, elliptical, or polygonal, which is specifically triangular, square, or the like. Certainly, the oxygen collection channels 18 and the hydrogen collection channels 110 are also in another structural form, which is not limited to those listed in this embodiment, as long as the gases and the electrolyte in the anode compartments and the cathode compartments can be separately collected and discharged.

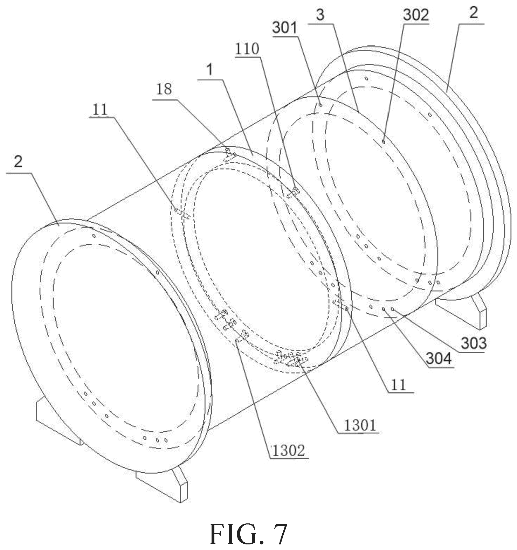

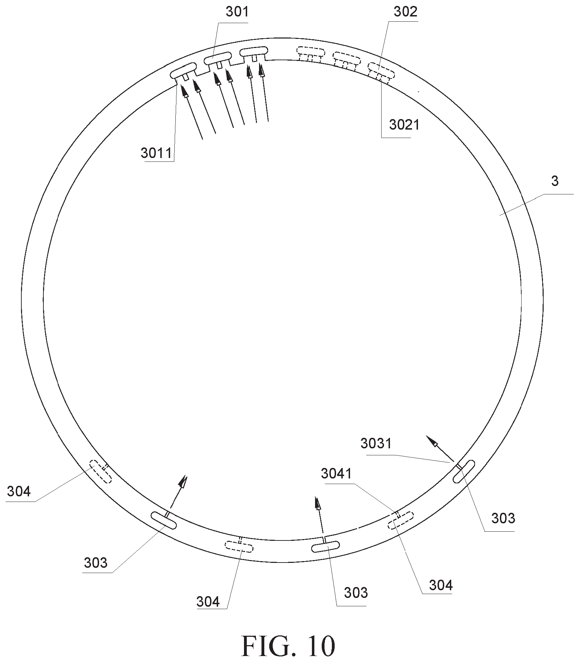

As shown in FIG. 7 and FIG. 10, the remaining electrode plate assemblies 3 located at two sides of the intermediate bipolar plate assembly in the plurality of electrode plate assemblies 3 include at least two bipolar plate assemblies. Each of the bipolar plate assemblies includes a bipolar plate. Two surfaces of the bipolar plate are an anode surface and a cathode surface respectively. The anode surface faces the anode compartment, and the cathode surface faces the cathode compartment. At least one anode channel 303, at least one cathode channel 304, a hydrogen discharge channel 302, and an oxygen discharge channel 301 are provided in the bipolar plate assembly. The anode channels 303 and the cathode channels 304 are alternately arranged along a circumferential direction of the bipolar plate assembly. In addition, the anode channels 303 communicate with the anode electrolyte distribution channels 1301 of the intermediate bipolar plate assembly in one-to-one correspondence. The cathode channels 304 communicate with the cathode electrolyte distribution channels 1302 of the intermediate bipolar plate assembly in one-to-one correspondence. The anode channel 303 and the oxygen discharge channel 301 both communicate with the anode compartment, and the cathode channel 304 and the hydrogen discharge channel 302 both communicate with the cathode compartment. Specifically, the anode channel 303 communicates with the anode compartment through an anode compartment passage slot 3031 provided on one end surface of the electrode plate frame close to the anode compartment. The cathode channel 304 communicates with the cathode compartment through a cathode compartment passage slot 3041 provided on the other end surface of the electrode plate frame close to the cathode compartment. The oxygen discharge channel 301 communicates with the anode compartment through an oxygen passage slot 3011 provided on one end surface of the electrode plate frame close to the anode compartment. The hydrogen discharge channel 302 communicates with the cathode compartment through a hydrogen passage slot 3021 provided on one end surface of the electrode plate frame close to the cathode compartment.

When the foregoing technical solution is adopted, the electrolyte flows from the chamber 12 of the intermediate electrode plate frame. A part of the electrolyte flows to the anode channels 303 of the bipolar plates through the anode electrolyte distribution channels 1301, and then enters the anode compartments through the anode channels 303, as shown by solid arrows in FIG. 8. Oxygen is produced after electrolysis. The oxygen enters the oxygen discharge channels 301 with the electrolyte, is ultimately collected in the oxygen collection channels 18 of the intermediate electrode plate frame, as shown by dashed arrows in FIG. 8, and is discharged to the external oxygen pipe 5. The other part of the electrolyte flows to the cathode channels 304 of the bipolar plates through the cathode electrolyte distribution channels 1302, and then enters the cathode compartments through the cathode channels 304, as shown by solid arrows in FIG. 8. Hydrogen is produced after electrolysis. The hydrogen enters the hydrogen discharge channels 302 with the electrolyte, is ultimately collected in the hydrogen collection channels 110 of the intermediate electrode plate frame, as shown by dashed arrows in FIG. 8, and is discharged to the external hydrogen pipe 6. The electrolyte distribution channels and the gas collection channels shorten electrolyte and gas flow paths, thereby improving distribution uniformity and making the electrolyzer have a compact structure.

Further, in this embodiment, the sectional shape of the axial segment of the anode electrolyte distribution channel 1301 is the same as the sectional shape of the anode channel 303. The sectional shape of the axial segment of the cathode electrolyte distribution channel 1302 is the same as the sectional shape of the cathode channel 304. The sectional shape of the axial segment of the oxygen collection channel 18 is the same as the sectional shape of the oxygen discharge channel 301. The sectional shape of the axial segment of the hydrogen collection channel 110 is the same as the sectional shape of the hydrogen discharge channel 302, so as to minimize sudden changes of the flow section, reduce adverse impact of phenomena such as cavitation and washout on the channels, and avoid leakage.

In some embodiments, a thickness of the bipolar plates is 6 mm to 12 mm; and in an embodiment, the thickness of the bipolar plates is 7 mm to 11 mm, and specifically, the thickness of the bipolar plates is 7 mm, 8 mm, 9 mm, 10 mm, or 11 mm. Selecting a bipolar plate having a thickness of less than 10 mm, for example, in a range of 7 to 10 mm, can further reduce a weight of the electrolyzer and reduce costs.

In some embodiments, a separator is further disposed between every two adjacent electrode plate assemblies 3. The separator is used for separating the anode compartment from the cathode compartment, so that the oxygen and the hydrogen that are produced are separated and collected separately, thereby improving purity of the gases. The cathode compartment is defined by a cathode surface of the electrode plate assembly 3, a support mesh, and a cathode electrode mesh. The anode compartment is defined by an anode surface of the electrode plate assembly 3, a support mesh, and an anode electrode mesh. The cathode surface and the anode surface of the bipolar plate are flat surfaces. The support meshes have a plate mesh structure, are used for supporting the anode electrode mesh and the cathode electrode mesh and transmitting currents between a surface of the electrode plate and the electrode meshes, and are obtained by stamping a thin steel plate.

In other embodiments, the cathode compartment is defined by a cathode surface of the electrode plate assembly 3 and a cathode electrode mesh. The anode compartment is defined by an anode surface of the electrode plate assembly 3 and an anode electrode mesh. The cathode surface and the anode surface have projections, and the projections are used for supporting the cathode electrode mesh and the anode electrode mesh and transmitting currents, so that the electrode plates on two sides of the separator form a "top-to-top" form, and reliable multi-point electrical contact is formed, thereby increasing an electrical contact area and further improving an efficiency of hydrogen production.

In some possible implementations, a sealing gasket is further disposed between every two adjacent electrode plate assemblies 3. The sealing gasket is located between one end of the electrode plate assembly 3 and the separator. An end surface of the electrode plate frame of the electrode plate assembly 3 is provided with a hole. The hole is used for releasing a compression amount of the sealing gasket. In this way, after being compressed, the sealing gasket is partially embedded in the hole to form a limit, so as to prevent the sealing gasket from being extruded out of the electrolyzer, which affects a sealing performance.

In the descriptions of the foregoing implementations, specific features, structures, materials, or characteristics is combined in an appropriate manner in any one or more embodiments or examples.

The foregoing descriptions are merely specific implementations of the present application, but a protection scope of the present application is not limited thereto. Any variation or replacement readily figured out by those skilled in the art within the technical scope disclosed in the present application shall fall within the protection scope of the present application. Therefore, the protection scope of the present application shall be subject to the protection scope of the claims.

## Claims

1. An electrode plate frame, comprising an annular frame body, an outer peripheral surface of the annular frame body being provided with one or a plurality of fluid inlets/outlets, mounting holes being provided around each of the plurality of fluid inlets/outlets, and the mounting holes being located on the outer peripheral surface of the annular frame body such that each fluid inlet/outlet and corresponding mounting holes form a flange structure for connecting to an external pipe.

2. The electrode plate frame according to claim 1, wherein a flange face of the flange structure is a flat surface.

3. The electrode plate frame according to claim 1, wherein the outer peripheral surface of the annular frame body is provided with a plurality of avoidance notches arranged at intervals along a circumferential direction, extension directions of the avoidance notches being parallel to an axis of the annular frame body.

4. The electrode plate frame according to claim 1, wherein the plurality of fluid inlets/outlets comprise gas outlets and electrolyte inlets.

5. The electrode plate frame according to claim 4, wherein the electrolyte inlets extend through the annular frame body along a radial direction of the annular frame body, and the annular frame body is further provided with electrolyte distribution channels, inlets of the electrolyte distribution channels being provided on an inner peripheral surface of the annular frame body, and outlets of the electrolyte distribution channels being provided on two end surfaces of the annular frame body.

6. The electrode plate frame according to claim 5, wherein the electrolyte distribution channels comprise at least two anode electrolyte distribution channels and at least two cathode electrolyte distribution channels, the anode electrolyte distribution channels and the cathode electrolyte distribution channels being alternately arranged along a circumferential direction of the electrode plate frame.

7. The electrode plate frame according to claim 6, wherein a central angle between two outermost anode electrolyte distribution channels among the at least two anode electrolyte distribution channels ranges from 60° to 180°, and/or a central angle between two outermost cathode electrolyte distribution channels among the at least two cathode electrolyte distribution channels ranges from 60° to 180°.

8. The electrode plate frame according to claim 4, wherein the gas outlets comprise oxygen outlets and hydrogen outlets, the oxygen outlets communicating with oxygen collection channels provided in the annular frame body, and the hydrogen outlets communicating with hydrogen collection channels provided in the annular frame body.

9. The electrode plate frame according to claim 1, wherein an outer diameter of the annular frame body ranges from 2 m to 3 m, and a radial thickness of the annular frame body ranges from 20 cm to 30 cm.

10. An electrolyzer, comprising two endplates and a plurality of electrode plate assemblies located between the two endplates, an electrolysis compartment being defined between every two adjacent electrode plate assemblies, and at least one of the plurality of electrode plate assemblies comprising the electrode plate frame according to any one of claims 1 to 9.

11. The electrolyzer according to claim 10, wherein at least one of the plurality of electrode plate assemblies located at two ends comprises the electrode plate frame.

12. The electrolyzer according to claim 11, wherein two outermost electrode plate assemblies among the plurality of electrode plate assemblies are respectively a positive electrode plate assembly and a negative electrode plate assembly, the positive electrode plate assembly and the negative electrode plate assembly being respectively disposed immediately adjacent to one of the two endplates, and the negative electrode plate assembly comprising the electrode plate frame.

13. The electrolyzer according to claim 11, wherein two outermost electrode plate assemblies among the plurality of electrode plate assemblies are both negative electrode plate assemblies, and one electrode plate assembly located in a middle among the plurality of electrode plate assemblies is a positive electrode plate assembly, each of the negative electrode plate assemblies comprising the electrode plate frame.

14. The electrolyzer according to claim 10, wherein an electrode plate assembly located in an intermediate position among the plurality of electrode plate assemblies comprises the electrode plate frame.

15. The electrolyzer according to claim 10, wherein at least one electrode plate assembly comprising the electrode plate frame further comprises two flat plates, the two flat plates being fixed to an edge of the electrode plate frame in parallel and at an interval, and the electrode plate frame and the two flat plates defining an electrolyte chamber.
